# EUROPÄISCHE PATENTSCHRIFT

(11) **EP 0 896 847 B1**
(45) Veröffentlichungstag und Bekanntmachung des Hinweises auf die Patenterteilung: **30.01.2002**
(21) Anmeldenummer: 98115168.1
(22) Anmeldetag: 12.08.1998
(51) Int. Cl.: B23D 31/00

(54) **Zerkleinerungsvorrichtung für eine Beschneidevorrichtung**
Shredding device in a trimming apparatus
Dispositif pour couper des déchets dans une machine à rogner

(30) Priorität: 14.08.1997 DE 19735236
(43) Veröffentlichungstag der Anmeldung: 17.02.1999
(73) Patentinhaber: Schuler Pressen GmbH & Co. KG, 73033 Göppingen (DE)
(72) Erfinder: Schuppler, Helmut, 73054 Eislingen (DE)

(56) Entgegenhaltungen:
- CH-A- 438 191

## Beschreibung

Die Erfindung betrifft eine Zerkleinerungsvorrichtung, die dazu vorgesehen ist, Abfallstücke von Werkstücken, wie sie insbesondere beim Beschneiden von Rändern von tiefgezogenen oder anderweitigen hohlen Werkstücken anfallen, in handhabbare Stücke zu zerteilen.

Insbesondere bei der Beschneidung von Rändern tiefgezogener oder anderweitiger hohler Werkstücke fallen meist ringförmige Abfallstücke an, die infolge des Schneidvorgangs meist relativ stark deformiert sind. Die genaue Form der Abfallstücke hängt von Zufälligkeiten und auch von der ursprünglichen Randform und Randbreite ab. Diese unterliegt Produktionsschwankungen, so dass die entstehenden Abfallstücke nur schwer handhabbar sind. Außerdem sind sie relativ sperrig. Deshalb ist es schwierig, diese Abfallstücke aus entsprechenden Schnittwerkzeugen zu entfernen, mit denen das betreffende Werkstück beschnitten worden ist.

Die Form der Abfallstücke hängt von dem zur Beschneidung gewählten Schnittwerkzeug ab. Bspw. ist aus der DE-PS 746977 eine Randbeschneidmaschine bekannt, die vier kreuzweise angeordnete, radial bewegliche Messer aufweist. Zur Randbeschneidung werden jeweils zwei gegenüberliegende Schneidmesser aufeinander zu bewegt, bis sie den betreffenden Randbereich durchtrennen und ein Stück aus dem Rand herausschneiden. Der Werkstückrand wird hier abschnittsweise beschnitten, wodurch Absätze entstehen können.

Ähnliches gilt für die aus der US-PS 2374301 bekannten Vorrichtung, bei der zum Randbeschneiden von becherförmigen Werkstücken ebenfalls vier radial verschiebbar gelagerte Messer vorgesehen sind, die über einen Nockenring betätigt werden. Jedes einzelne Messer schneidet auf einer Seite des becherförmigen Werkstücks einen Randbereich heraus, der dann mit Druckluft aus der Vorrichtung entfernt wird.

Im Gegensatz zu Beschneidmaschinen, die den Rand in einem mehrstufigen Vorgang schrittweise beschneiden und einzelne kürzere Abfallstücke erzeugen, ist aus Schnitt-, Stanz- und Ziehwerkzeuge, G. Oehler, Springer-Verlag Berlin/Göttingen/Heidelberg 1962, eine Vorrichtung für den Schüttelbeschneideschnitt bekannt, die von dem Werkstück einen ringförmigen Randbereich abtrennt. Das Schnittwerkzeug weist eine Werkstückaufnahme auf, die das Werkstück außen bis zur Höhe des abzuschneidenden Rands umschliesst. Die Aufnahme ist gegen die Kraft von Gegenhaltern vertikal nach unten bewegbar. Eine äußere Führung zwingt die Werkstückaufnahme dabei auf eine Spiralbahn. Zu dem Werkzeug gehört außerdem ein in das Werkstück einzuführendes Gegenstück, dessen Unterkante im Bereich der Oberkante der Werkstückaufnahme endet. Dieses Gegenstück wird beim Niederdrücken der Werkstückaufnahme axial geführt, wobei keine seitliche Bewegung möglich ist. Es entsteht infolge der Spiralbewegung der Werkstückaufnahme eine Relativbewegung zwischen dem Gegenhalter und der Werkstückaufnahme, wodurch der abzutrennende Werkstückrand abgeschert wird. Der Rand bildet ein ringförmiges Abfallstück, das es zu entfernen gilt.

Die genannte Beschneidvorrichtung ermöglicht einen absatzfreien Schnitt an dem Rand des Werkstücks, was bei vielen Anwendungsfällen von Vorteil ist. Jedoch bringen die ringförmigen Abfallstücke Probleme bei ihrer Handhabung mit sich.

CH-438 191 offenbart eine Vorrichtung zum Zerteilen der Abfallstücke mittels Trennmessern. Der Erfindung liegt die Aufgabe zugrunde, eine Vorrichtung zu schaffen, die die Abführung solcher Abfallstücke erleichtert.

Diese Aufgabe wird mit der Zerkleinerungsvorrichtung gelöst, die die Merkmale des Patentanspruchs 1 aufweist.

Die erfindungsgemäße Zerkleinerungsvorrichtung weist einen ringförmigen Aufnahmeraum für die Abfallstücke auf, der ausreichend geräumig zur Aufnahme von Abfallstücken ist, wie sie bei der Randbeschneidung von hohlen oder tiefgezogenen Werkstücken anfallen. Ausschlaggebend ist hier vor allem eine ausreichende radiale Weite des Aufnahmeraums, um die im Ergebnis des Randbeschneidungsprozesses relativ zufällig deformierten ringförmigen Abfallstücke aufnehmen zu können. Es hat sich als zweckmäßig herausgestellt, wenn die freie radiale Weite des Aufnahmeraums wenigstens ungefähr ein Zehntel des Durchmessers der aufzunehmenden ringförmigen Abfallstücke beträgt. Die Abfallstücke können dann frei in den Aufnahmeraum fallen. Die Abfallstücke liegen hier auf einer Auflagefläche, die mehrfach weiträumig unterbrochen sein kann. Im Einzelfall genügt es, wenn die Auflagefläche durch drei oder mehrere Finger, Schieber oder dgl. definiert ist, auf denen das Abfallstück dann liegt.

Die Zerkleinerungsvorrichtung weist an Schiebern ausgebildete Schneidkanten, d.h. Messer auf, die dazu vorgesehen sind, das auf der Auflagefläche dienende Abfallstück zu zerteilen. Dabei sind die Schieber zu zwei Gruppen zusammengefasst. Die Schieber der ersten Gruppe sind bezüglich des ringförmigen Aufnahmeraums radial innen angeordnet und mittels einer Antriebseinrichtung radial nach außen expandierbar. Die Schieber oder Messer der zweiten Gruppe sind strahlenförmig von dem ringförmigen Aufnahmeraum nach außen weg weisend angeordnet und können mittels einer zweiten Antriebseinrichtung radial nach innen vorgeschoben werden. Sind alle Schieber in Ruhestellung, geben sie den Aufnahmeraum völlig frei und ragen nicht in diesen hinein. Werden die Schieber zum Zerteilen des Abfallstücks aktiviert, d.h. die entsprechenden Antriebseinrichtungen betätigt, fahren die Schieber in den Aufnahmeraum und durchtrennen das Abfallstück, so dass einzelne, leicht handhabbare Stücke entstehen. Diese fallen zwischen den Schiebern nach unten und werden abtransportiert.

Die Schiebergruppen werden vorzugsweise zeitversetzt überlappend betätigt. Bspw. werden erst die Schieber der inneren Gruppe aktiviert, die das Abfallstück aufnehmen und den Aufnahmeraum sperren, wobei die äußeren Schieber noch inaktiv sind. Dadurch wird verhindert, dass mehrere Abfallringe in den Aufnahmeraum fallen.

Die Schieber der radial innen angeordneten Gruppe werden soweit expandiert, dass sie mit ihrem radial außen liegenden Stirnflächen das ringförmige Abfallstück aufnehmen und ggf. etwas spannen. Das Abfallstück wird dabei unabhängig von seiner ursprünglichen Form in eine definierte vorgegebene Form überführt. Damit ist das ringförmige Abfallstück in definierter Position gehalten, um von den äußeren Schiebern zerteilt zu werden. Das Abfallteil wird jeweils zwischen einem äußeren und einem inneren Schieber zerteilt, die eine Schere bilden. Die erzeugten kurzen Abfallstücke lassen sich einfach entfernen.

Sowohl der äußere als auch der innere Schieber eines Schieberpaars weisen eine stirnseitige Schneidkante auf, die bezüglich des ringförmigen Abfallstücks etwa axial orientiert sind. Die Schneidkanten sind dabei vorzugsweise wesentlich länger als die Breite des Abfallstücks in Axialrichtung. Dadurch wird sichergestellt, dass das Abfallstück unabhängig von seiner genauen Lage in dem Aufnahmeraum zerteilt wird.

Die Schieber der beiden Gruppen werden vorzugsweise unterschiedlich betätigt. Bspw. werden die Schieber der inneren Gruppe über Schrägflächen betätigt, die an einem vertikal verstellbaren Element ausgebildet sind. Dieses kann ein sogenannter Hochbringer sein, der das Werkstück nach erfolgtem Beschneidvorgang nach oben aus der Form herausführt. Der Hochbringer ist in diesem Fall ein etwa zentral in der Form angeordneter Stößel, der beim Schliessen der Form vertikal nach unten bewegt wird und mit seinen Schrägflächen die Schieber der inneren Gruppe radial expandiert, womit diese in den Aufnahmeraum eindringen und mit ihren Stirnflächen den von dem vorigen Beschneidvorgang erzeugten, in dem Aufnahmeraum liegenden Abfallring aufnehmen.

Zur Betätigung der Schieber der anderen Gruppe kann die gleiche Antriebseinrichtung dienen. In diesem Fall sind die erste und die zweite Antriebseinrichtung miteinander identisch. Vorzugsweise wird jedoch eine gesonderte Antriebseinrichtung vorgesehen. Dies ist insbesondere dann vorteilhaft, wenn die Zerkleinerungsvorrichtung mit einem Schnittwerkzeug kombiniert ist, das zum Abtrennen des Rands von dem hohl ausgebildeten oder tiefgezogenen Werkstück dient. Bspw. weist diese Schnittvorrichtung eine Taumelplatte auf, die eine zentrale Öffnung mit einer Schneidkante an ihrer inneren Berandung aufweist. In Ruhestellung ist die Taumelplatte mit ihrer Öffnung zentral zu dem Werkstück gehalten. Zum Abtrennen des Rands wird die Taumelplatte seitlich verstellt, so dass ihre Schneidkante den Rand des Werkstücks an einer ersten Stelle durchtrennt, wonach die Taumelplatte in einer Taumel- oder Umlaufbewegung angetrieben wird, um den Rand des Werkstücks abzutrennen. Aus dieser Bewegung kann die Bewegung der Schieber der äußeren Gruppe abgeleitet werden. Die Taumelplatte weist dazu für jeden Schieber der äußeren Gruppe eine Kulissenführung auf, mit der lediglich die Radialkomponente der Bewegung der Taumelplatte auf den jeweiligen Schieber übertragen wird. Durch diese Art des Antriebs können gesonderte Antriebsmittel eingespart werden, und die Durchtrennung des Abfallstücks erfolgt während der Umlaufbewegung der Taumelplatte an unterschiedlichen Stellen zeitlich versetzt. Im Gegensatz zum gleichzeitigen Arbeiten aller Schieber wird dadurch eine Addition der Einzelkräfte vermieden und eine zeitlich ausgeglichenere Belastung des Antriebs erreicht.

Weitere Einzelheiten vorteilhafter Ausführungsformen der Erfindung ergeben sich aus Unteransprüchen der nachfolgenden Beschreibung und der dazugehörigen Zeichnung. In dieser zeigen:
Fig. 1 eine an einem Schnittwerkzeug vorgesehene Zerkleinerungsvorrichtung, in schematisierter, längsgeschnittener Darstellung,
Fig. 2 die Zerkleinerungsvorrichtung nach Figur 1, in einer Prinzipskizze in Draufsicht,
Fig. 3 das Schnittwerkzeug und die Zerkleinerungsvorrichtung nach Figur 1, in Draufsicht und
Fig. 4 das Schnittwerkzeug nach Figur 3, geschnitten entlang der Linie IV-IV in schematisierter Schnittdarstellung.

### Beschreibung:

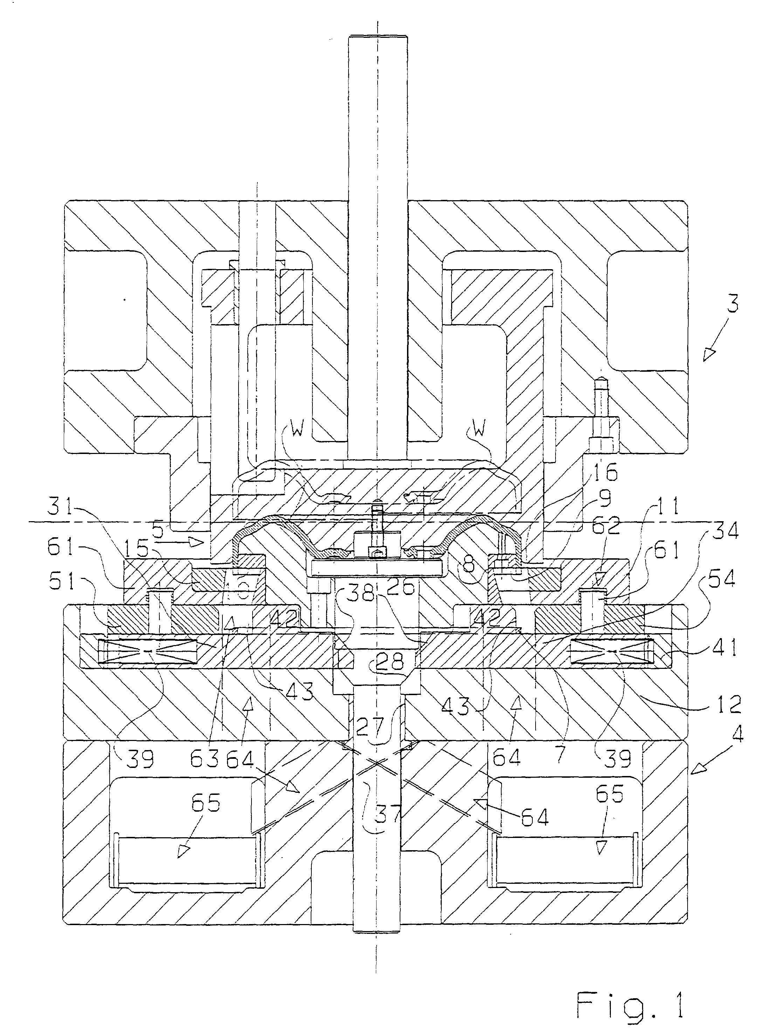

In Figur 1 ist ein Werkzeug 1 einer nicht weiter veranschaulichten Pressenstufe oder einer Presse veranschaulicht, das der Beschneidung des Randes eines Werkstücks 2 dient. Das in Oberwerkzeug 3 und Unterwerkzeug 4 unterteilte Werkzeug 2 weist dazu ein Schnittwerkzeug 5 auf, das mit einer Zerkleinerungsvorrichtung 6 zum Zerteilen des ringförmigen, von dem Werkstück 2 abgetrennten Rands 7 kombiniert ist.

Zu dem Schnittwerkzeug 5 gehört ein Schnittstempel 8, der einen ortsfest gelagerten Teil des Unterwerkzeugs 4 bildet. Der Schnittstempel 8 ist an seiner Oberseite mit einer Auflagefläche versehen, deren Kontur der Innenform des Werkstücks W entspricht. An seiner Unterseite trägt der Schnittstempel ein ringförmiges Schneidelement 9, dessen untere äußere Kante eine Schneidkante 10 ist.

Zum Abtrennen des von dem Werkstück W zu entfernenden Randes 7 dient eine Taumelplatte 11, die auf einer zu dem Unterwerkzeug 4 gehörigen, ortsfest gelagerten Grundplatte 12 aufliegt und auf dieser verschiebbar gelagert ist. Die Taumelplatte 11 ist mit einer zentralen Öffnung 14 versehen, in die ein als Schnittkörper dienender Schnittring 15 eingesetzt ist. Der Schnittring 15 weist eine dem Werkstück W zugewandte Schneidkante 16 auf, deren Kontur der Außenkontur des Werkstücks W angepasst ist. Jedoch ist der Durchmesser etwas größer. Der Schnittring 15 bildet mit dem Schneidelement 9 eine Schere, deren Form dem Rand des Werkstücks W angepasst ist.

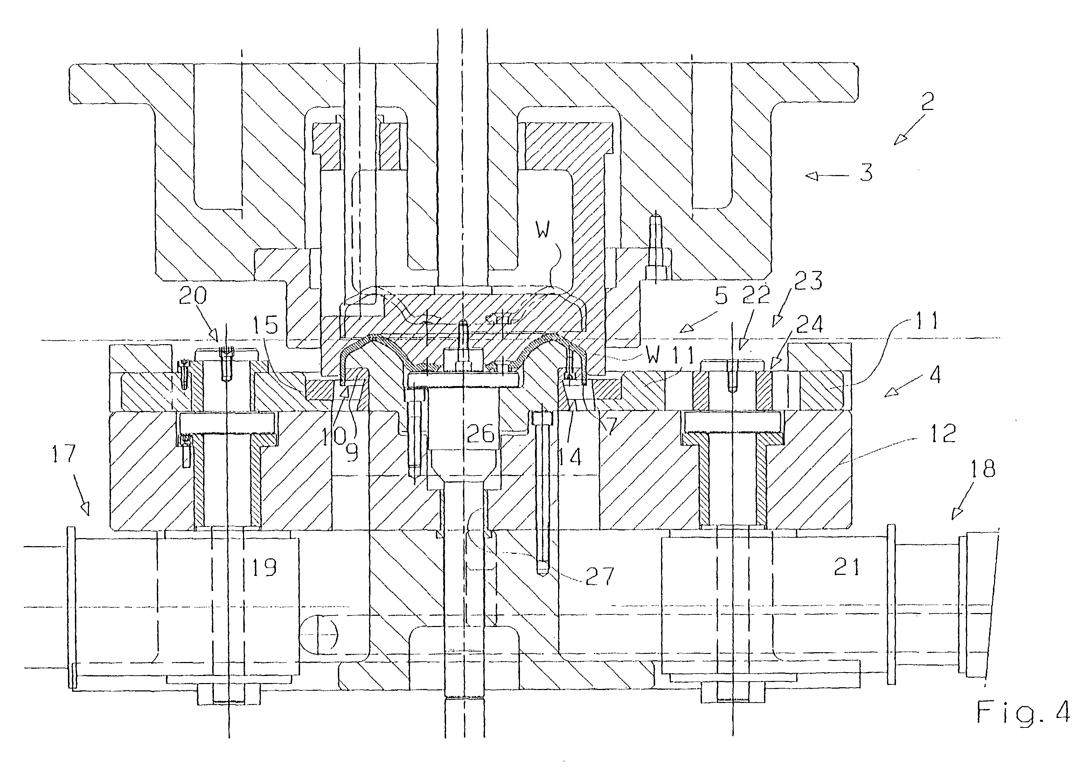

Die Taumelplatte 11 ist über zwei Servomotoren 17, 18 angetrieben (Figur 4). Der Servomotor 17 arbeitet über ein Winkelgetriebe 19 auf einen drehbar an der Grundplatte 12 gelagerten Exzenter 20, der die Taumelplatte 11 hier auf einer Kreisbahn planparallel zu der Grundplatte 12 verschiebt, wenn der Servomotor 17 angesteuert wird. Der Servomotor 18 arbeitet ebenfalls über ein Winkelgetriebe 21 auf einen Exzenter 22, der die Taumelplatte 11 über eine Kulissenführung 23 antreibt. Zu dieser gehören ein auf dem Exzenter 22 sitzender Kulissenstein 24, der in einem entsprechenden Langloch 25 der Taumelplatte 11 sitzt.

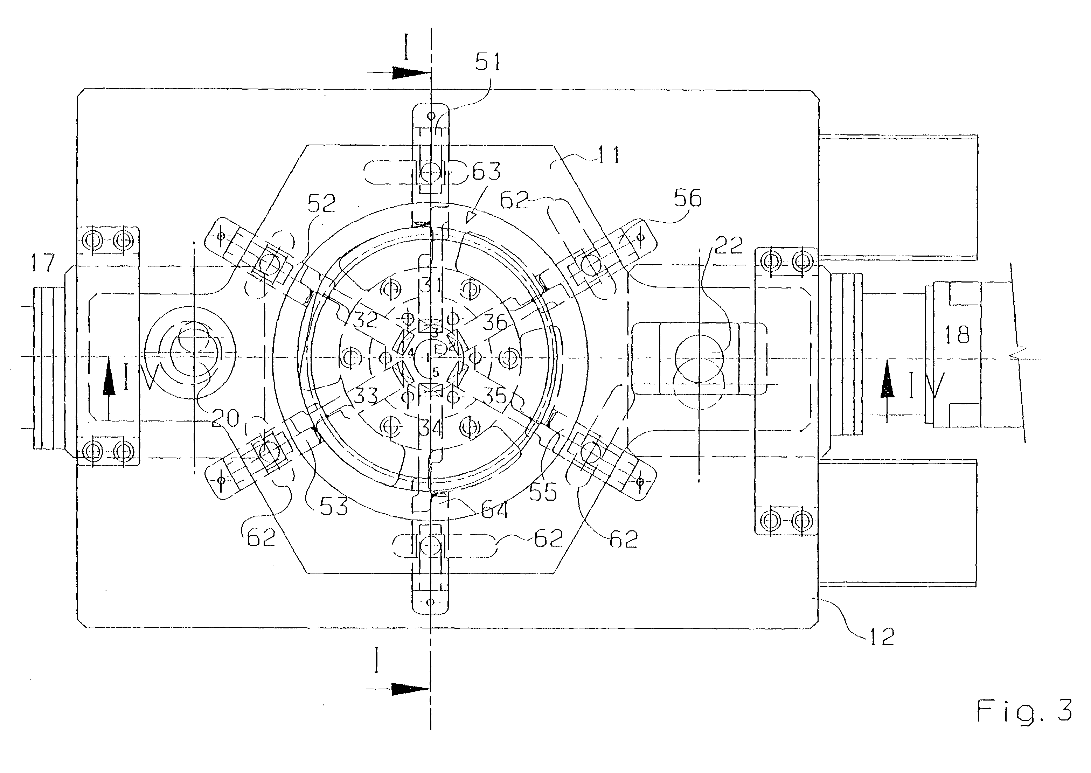

Werden die Servomotoren 17, 18 zeitversetzt nacheinander angesteuert, durchläuft jeder Punkt der Schneidkante 19 die im Zentrum von Figur 3 qualitativ dargestellte Bahnkurve. Bei noch stehendem Servomotor 18 wird zunächst der Servomotor 17 angesteuert, so dass die Bahnkurve beginnend von dem Zentralpunkt 1 über Punkt 2 zu Punkt 3 durchlaufen wird. Dieser Bahnkurventeil ist ein Ellipsenbogen. In diesem Kurvenbereich erfolgt der Anschnitt des Rands, und es beginnt die Schnittfortsetzung. Ist der Bahnpunkt 3 erreicht, wird der Servomotor 18 gestartet, so dass nun beide Servomotoren 17, 18 laufen womit die Bahnpunkte 4 und 5 erreicht werden. Der Schnitt ist nun um das Werkstück W herumgeführt. Der Servomotor 17 wird gestoppt und der Servomotor 18 läuft in seine Ausgangsposition weiter, womit die Taumelplatte 11 zu dem Punkt 1 der Bahnkurve zurückkehrt.

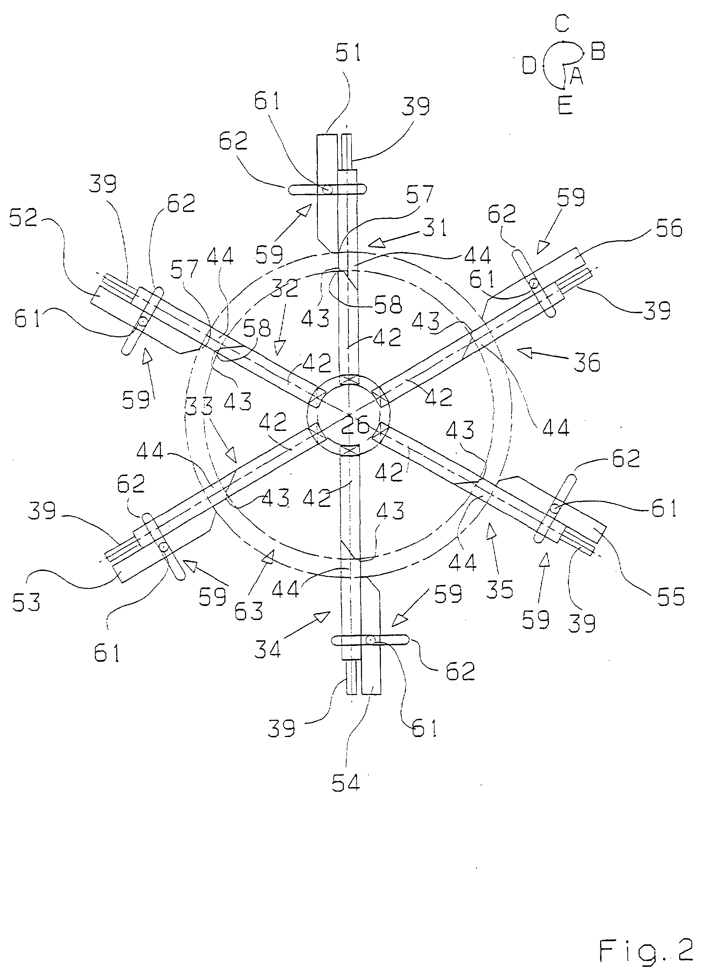

Der Schnittstempel 8 weist eine zentrale Öffnung auf, in der vertikal verschiebbar ein Hochbringer 26 angeordnet ist. Dieser ist vertikal verstellbar und dient dazu, das Werkstück W von den Schnittstempeln 8 abzuheben wenn es von dem Rand 7 befreit ist. Der Hochbringer 26 der an seiner Oberseite eine Anlagefläche für das Werkstück W aufweist, ist in einer entsprechenden Lagerbuchse 27 an der Grundplatte 12 verschiebbar gelagert. Zwischen der Lagerbuchse 27 und seinem oberen Ende ist der Hochbringer mit einer auf einem Kegelmantel liegenden Schrägfläche 28 versehen, die der Betätigung von Schiebern 31 bis 36 dient (schematisch in Figur 2 und in Figur 3). Diese Schieber 31 bis 36 sind bezüglich der Längsmittelachse 37 des Hochbringers 26 etwa radial angeordnet und in entsprechenden Aufnahmenuten der Grundplatte 12 verschiebbar gelagert. Die Schieber 31 bis 36 weisen an ihrer dem Hochbringer 26 zugewandten Seite jeweils eine Schrägfläche 38 auf, deren Neigung der Neigung der Schrägfläche 28 angepasst ist.

Um die Schieber 31 bis 36 radial nach innen auf den Hochbringer 26 hin vorzuspannen, sind die Schieber 31 bis 36 an ihrem außenliegenden Ende jeweils mit einer Bohrung versehen in der jeweils eine Schraubenfeder 39 sitzt. Diese stützt sich außen an einem von der Grundplatte 12 gehaltenen Widerlager 41 ab. Die Anordnung ist dabei insgesamt so getroffen, dass die Schieber 31 bis 36 in einer radial nach außen verstellten Position befindlich sind, wenn sich der Hochbringer 26 in seiner unteren Position befindet, in der das Werkstück W auf den Schnittstempel 8 aufsitzt. Wird das Werkstück W freigegeben und fährt der Hochbringer 26 unter Mitnahme des Werkstücks W nach oben, gleitet die Schrägfläche 28 an den endseitigen Schrägflächen 38 der Schieber 31 bis 36 vorbei, so dass diese unter der Wirkung der Schraubenfedern 39 radial nach innen zu verstellt werden.

Jeder Schieber 31 bis 36 ist an seiner Oberseite mit einem Vorsprung 42 versehen, der an seiner radial außen liegenden Seite eine Stirn- oder Anlagefläche 43 aufweist. Unterhalb der Anlage- oder Stirnfläche 43 definiert der jeweilige Schieber 31 bis 36 eine rechtwinklig zu ihr orientierte Auflagefläche 44 für den das Abfallstück bildenden Rand 7.

Den eine erste Gruppe bildenden Schiebern 31 bis 36 sind eine zweite Gruppe bildende Gruppe Schieber 51 bis 56 zugeordnet (Figur 2), die bezüglich des Hochbringers 26 etwa radial verschiebbar in entsprechenden Führungen der Grundplatte 12 gelagert sind. Dabei ist jedem Schieber 31 bis 36 jeweils ein Schieber 51 bis 56 zugeordnet. An ihren einander zugewandten Seiten sind die Schieber 31, 51 mit etwa parallel zu der Längsmittelachse 37 des Hochbringers 26 orientierten Schneidkanten 57, 58 versehen. Gleiches gilt für die weiteren Schieberpaare 32,52 bis 36,56.

Die Schieber 51 bis 56 sind jeweils über eine Kulissenführung 59 mit der Taumelplatte 11 verbunden, die als Antriebseinrichtung für alle Schieber 51 bis 56 der äußeren Schiebergruppe dient. (Alternativ können auch gesonderte Antriebe für den Schieber vorgesehen sein.) Zu jeder Kulissenführung 59 gehört, wie aus Figur 1 ersichtlich, ein sich von dem jeweiligen Schieber 51 bis 56 vertikal nach oben erstreckender Zapfen 61, der in eine entsprechende Nut 62 der Taumelscheibe 11 greift. Die Nute 62 erstrecken sich etwa tagential zu einem gedachten Kreis, der konzentrisch zu dem Hochbringer 26 angeordnet ist. Die so gebildeten Kulissenführungen 59 dienen der Übertragung der Radialbewegung der Taumelplatte 11 auf die jeweiligen Schieber 51 bis 56, und der Entkopplung sonstiger Bewegungen.

Radial nach außen und nach innen begrenzen die Schieber 51 bis 56, bzw. 31 bis 36 einen Aufnahmeraum 63 für den abgetrennten Rand des Werkstücks W. Dieser Aufnahmeraum 63 ist durch die Auflagefläche 44 der Schieber 51 bis 56 nach unten hin begrenzt. Nach oben, d.h. zu dem Schnittwerkzeug 5 hin, ist der Aufnahmeraum 63 offen. Die radiale Weite des Aufnahmeraums 63 ist, wenn alle Schieber 31 bis 36 und 51 bis 56 in ihrer jeweils rückgezogenen Position befindlich sind, relativ groß. Die Weite beträgt ungefähr ein Zehntel des Durchmessers des Rands 7. So wird sichergestellt, dass auch mehr oder weniger stark verformte Ränder 7 frei in den Aufnahmeraum fallen können.

Zwischen den Schiebern 51 bis 56 sind jeweils Abfallschächte 64 ausgebildet, durch die Stücke des zerteilten Rands 7 auf Bandförderer 65 zum weiteren Abtransport fallen können. Die Abfallschächte 64 sind dabei relativ breit, wobei ihre in Umfangsrichtung des Aufnahmeraums 63 gemessene Weite wenigstens am Eintritt, d.h. zwischen benachbarten Schiebern 31, 32 (usw.) jeweils dem Abstand zwischen diesen entspricht.

Die insoweit beschriebene Zerkleinerungsvorrichtung 6 arbeitet wie folgt:

Es wird zunächst davon ausgegangen, dass das Werkzeug 1 offen, d.h. das Oberwerkzeug 3 von dem Unterwerkzeug 4 abgehoben ist. In diesem Zustand wird ein Werkstück W auf den Schnittstempel 8 aufgelegt und das Werkzeug 1 wird geschlossen. Der Rand 7 des Werkstücks W ragt über die Schneidkante 10 hinaus nach unten. Es werden nun die beiden Servomotoren 17, 18 um 180° bezüglich der Exzenterdrehung phasenversetzt angesteuert, so dass die Taumelplatte 11 die in Figur 3 veranschaulichte Bahnkurve durchläuft. Dadurch wird der Rand 7 des Werkstücks W abgetrennt und fällt nach unten. Der ringförmige Rand kann dabei zunächst auf den Vorsprüngen 42 der Schieber 31 bis 36 zu liegen kommen. Diese Schieber 31 bis 36 sind durch den in seinen unteren Todpunkt befindlichen Hochbringer 26 in ihrer radial äußeren Position gehalten, so dass die Vorsprünge 42 in dem Aufnahmeraum 63 stehen.

Ist der Rand des Werkstücks W vollständig beschnitten, wird das Werkzeug 1 geöffnet, indem das Oberwerkzeug 3 nach oben fährt. Um das Werkstück W aus dem Unterwerkzeug herauszuführen wird der Hochbringer 26 betätigt, der dadurch vertikal nach oben verfahren wird. Wenn die Schrägfläche 28 die Schieber 31 bis 36 passiert, gleiten die Schieber 31 bis 36 unter der Wirkung der Schraubenfedern 39 radial nach innen, wodurch die Vorsprünge 42 den Aufnahmeraum 63 freigeben. Spätestens jetzt fällt der bislang auf den Vorsprüngen 42 liegende ringförmige Rand in den Aufnahmeraum auf die Auflagefläche 44. Wird nun der Hochbringer 26 wieder in seinen unteren Todpunkt verstellt, passiert die Schrägfläche 28 die Schieber 31 bis 36 in Gegenrichtung und expandiert die Schieber 31 bis 36 nach außen. Die Vorsprünge 42 nehmen damit mit ihrer jeweiligen Anlagefläche 43 den Rand 7 auf und halten diesen etwa koaxial zu der Längsmittelachse 37.

Zwischenzeitlich ist ein weiteres Werkstück W auf den Schnittstempel 8 aufgelegt worden und das Werkzeug 1 ist geschlossen. Es liegt der ringförmige Rand 7 des dem vorangegangen Beschneidvorgang unterworfenen Werkstücks in dem Aufnahmeraum 63. Um den noch an dem Werkstück W vorhandenen Rand 7 zu entfernen und um das in dem Aufnahmeraum 63 liegende Abfallstück 7 zu zerteilen, werden nun zunächst der Servomotor 17 und, nachdem dessen Exzenter 20 180° weiter gedreht hat, der Servomotor 18 angesteuert, so dass beide Exzenter 20, 22 überschneidend, jedoch zeitversetzt um 360° drehen. Während nur der Servomotor 17 dreht, durchläuft die Taumelplatte 11 den Abschnitt A, B, C der in Figur 2 veranschaulichten Bahnkurve. Während der Servomotor 17 weiterdreht, wird der Servomotor 18 gestartet und es werden die Punkte C, D, E der Bahnkuve durchlaufen. Nun stoppt der Servomotor 17 und der Servomotor 18 läuft in seine Ausgangsstellung weiter, womit der Abschnitt E, A der Bahnkurve durchlaufen wird.

Entsprechend werden über die Kulissenführungen 59 zunächst die Schieber 52, 53 von der Taumelplatte 11 radial nach innen verstellt (Abschnitt A, B der Bahnkurve). Bei weiterem Durchlaufen der Bahnkurve (B, C) beginnen die Schieber 52, 53 wieder in ihre radial äußere Position zurück zu führen. Im Punkt C ist der Schieber 54 radial ganz nach innen verstellt, wobei auch dieser in seiner radial äußeren Position zurück zu laufen beginnt und die Schieber 55, 56 radial nach innen laufen, wenn sich die Taumelplatte 11 an den Bahnpunkt D annähert. Entsprechend setzt sich die Bewegung durch den Bahnpunkt E fort, wobei wenn der Bahnpunkt A erreicht ist wieder alle Schieber 51 bis 56 in ihrer radial äußeren Position befindlich sind und den Aufnahmeraum 63 freigeben. Die Schieber 51 bis 56 werden demnach nacheinander zeitversetzt nach innen geführt, so dass die nach innen gerichtete Radialbewegung der Schieber 51 bis 56 wie in einer umlaufenden Wellenbewegung stattfindet. Jeder Schieber 51 bis 56 bildet mit seinem gegenüberliegenden Schieber 31 bis 36 ein Paar, dessen Schneidkanten 57, 43 einander überschneiden, wenn die betreffenden inneren Schieber 31 bis 36 expandiert sind und somit in den Aufnahmeraum ragen und der jeweils zugeordnete Schieber 51 bis 56 von der Taumelplatte 11 nach innen verstellt wird. Der zwischen den Schiebern 31 bis 36 und 51 bis 56 liegende Ring 7 wird dadurch in aufeinanderfolgenden Schnittvorgängen in Einzelstücke zerteilt, die durch die Abfallschächte 64 frei nach unten fallen können und nachfolgend von den Bandfördern 65 abtransportiert werden.

Eine Zerkleinerungsvorrichtung 6 ist insbesondere zum Zerkleinern von Abfallstücken, insbesondere ringförmigen Abfallstücken vorgesehen, die aus einer Maschine, einem Werkzeug oder einer sonstigen Bearbeitungsvorrichtung 6 zu entfernen sind. Die Zerkleinerungsvorrichtung weist einen ringförmigen Aufnahmeraum 63 für das Abfallstück auf. Schieber 31 bis 36 einer ersten Gruppe sind radial innen angeordnet und können kraftbetätigt in Radialrichtung in den Aufnahmeraum 63 verschoben werden. Äußere Schieber 51 bis 56 sind strahlenförmig um den Aufnahmeraum 63 herum angeordnet und können ebenfalls kraftbetätigt radial nach innen in den Aufnahmeraum 63 verstellt werden. Jeweils zwei Schieber bilden eine Schere zum Zerteilen des Abfallstücks. Während die inneren Schieber 31 bis 36 gleichzeitig expandiert werden, erfolgt das radiale Verstellen der äußeren Schieber 51 bis 56 in einer umlaufenden Folge. Durch die bewegliche Lagerung sowohl der inneren als auch der äußeren Schieber wird erreicht, dass der Aufnahmeraum 63 relativ weit ist, und somit auch deformierte Abfallstücke sicher aufgenommen werden können. Andererseits wird durch die Verstellung der inneren Schieber 31 bis 36 radial nach außen nicht nur eine definierte Aufnahme des jeweils zu zerteilenden Abfallstücks erreicht, sondern darüberhinaus, dass kein weiteres Abfallstück in den Aufnahmeraum 63 fallen kann und somit von den Schiebern 31 bis 36 bzw. von an diesen vorgesehenen Vorsprüngen 42 in Warteposition gehalten wird.

## Patentansprüche

1. Zerkleinerungsvorrichtung (6) zum Zerteilen von Abfallstücken (7), insbesondere ringförmigen Abfallstükken,
mit einem ringförmigen Aufnahmeraum (63) für die Abfallstücke (7), der eine Auflagefläche (44) für das Abfallstück (7) aufweist und dessen radiale Weite deutlich größer ist als die Wanddicke der Abfallstücke (7),
mit einer Gruppe von inneren Schiebern (31 bis 36), die in einem von dem Aufnahmeraum (63) umgebenen Bereich angeordnet und im wesentlichen in Radialrichtung verstellbar gelagert sind,
mit wenigstens einer ersten Antriebseinrichtung (26), die zum gezielten und kraftbetätigten Verstellen der inneren Schieber (31 bis 36) in Radialrichtung mit den Schiebern (31 bis 36) in Wirkverbindung steht, so dass die Schieber (31 bis 36) mit ihren Stirnseiten (43) von innen her in den Aufnahmeraum (63) hinein und aus diesem heraus positioniert werden können,
mit einer Gruppe von äußeren Schiebern (51 bis 52), die radial außerhalb des Aufnahmeraums (63) angeordnet und im wesentlichen in Radialrichtung verstellbar gelagert sind, und
mit wenigstens einer zweiten Antriebseinrichtung (11), die zum gezielten kraftbetätigten Verstellen der äußeren Schieber (51 bis 56) mit den äußeren Schiebern (51 bis 56) in Wirkverbindung steht, so dass die Schieber (51 bis 56) mit ihren Stirnseiten von außen her in den Aufnahmeraum (63) hinein und aus diesem heraus positioniert werden können.

2. Zerkleinerungsvorrichtung nach Anspruch 1, **dadurch gekennzeichnet, dass** jeweils ein äußerer Schieber (51 bis 56) und ein zugeordneter innerer Schieber (31 bis 36) als zusammenwirkendes Schieberpaar eine Schere bilden.

3. Zerkleinerungsvorrichtung nach Anspruch 1, **dadurch gekennzeichnet, dass** jeder innere Schieber (31 bis 36) eine stirnseitige Schneidkante (58) aufweist.

4. Zerkleinerungsvorrichtung nach Anspruch 1, **dadurch gekennzeichnet, dass** jeder äußere Schieber (51 bis 56) eine stirnseitige Schneidkante (57) aufweist.

5. Zerkleinerungsvorrichtung nach Anspruch 1, **dadurch gekennzeichnet, dass** die inneren Schieber (31 bis 36) von ihrer jeweiligen Antriebseinrichtung (26, 39) gleichzeitig in ihre vorgeschobene bzw. ihre rückgezogene Position überführbar sind.

6. Zerkleinerungsvorrichtung nach Anspruch 5, **dadurch gekennzeichnet, dass** die Antriebseinrichtung (26, 39) ein rechtwinklig zu der Radialrichtung verschiebbar gelagertes Element (26) aufweist, das für den jeweiligen Schieber (31 bis 36) eine Schräg- oder Keilfläche (28) aufweist, die den Schieber (31 bis 36) radial bewegt, wenn das Element (26) längs verschoben wird.

7. Zerkleinerungsvorrichtung nach Anspruch 1, **dadurch gekennzeichnet, dass** die inneren Schieber (31 bis 36) Abschnitte aufweisen, die die Auflagefläche (44) für das Abfallstück (7) definieren.

8. Zerkleinerungsvorrichtung nach Anspruch 1, **dadurch gekennzeichnet, dass** die äusseren Schieber (51 bis 56) von ihrer jeweiligen Antriebseinrichtung (11) zeitversetzt in Radialrichtung betätigt werden.

9. Zerkleinerungsvorrichtung nach Anspruch 8, **dadurch gekennzeichnet, dass** die Antriebseinrichtung (11) für die zeitversetzt zu betätigenden Schieber eine Taumelplatte (11) ist, die mit den Schiebern (51 bis 56) in Antriebsverbindung steht und die im Wesentlichen parallel zu der Auflagefläche (44) für das Abfallstück (7) angeordnet ist.

10. Zerkleinerungsvorrichtung nach Anspruch 9, **dadurch gekennzeichnet, dass** die Taumelplatte (11) mit einem Antriebsmittel (17, 18) verbunden ist, das die Taumelplatte (11) in Ruhestellung in eine Position (A) überführt, in der alle von der Taumelplatte (11) angetriebenen Schieber (51 bis 56) in nicht vorgeschobener Position befindlich sind, und das die Taumelplatte (11) zum zeitversetzten Vorschieben der Schieber (51 bis 56) auf einer Umlaufbahn (B, C, D, E) führt.

11. Zerkleinerungsvorrichtung nach Anspruch 9, **dadurch gekennzeichnet, dass** die Taumelplatte (11) mit den Schiebern (51 bis 56) jeweils über eine Kulissenführung (59) verbunden ist, die die Radialkomponente der Bewegung der Taumelplatte (11) auf die Schieber (51 bis 59) überträgt und die Taumelplatte (11) im übrigen von den Schiebern (51 bis 56) entkoppelt.

12. Zerkleinerungsvorrichtung nach Anspruch 1, **dadurch gekennzeichnet, dass** das Antriebsmittel (17, 18) zwei Servomotoren enthält, von denen einer über einen Exzentertrieb (20) und der andere über eine Exzenter-Kulissenführung (22, 23) mit der Taumelplatte (11) verbunden ist.

13. Zerkleinerungsvorrichtung nach Anspruch 1, **dadurch gekennzeichnet, dass** die Taumelplatte (11) eine zentrale oberhalb des Aufnahmeraums (63) angeordnete Öffnung (14) aufweist, an deren Berandung eine Schneidkante (16) zu Beschneiden tiefgezogener oder anderweitiger hohl ausgebildeter Werkstücke (W) aufweist.

14. Zerkleinerungsvorrichtung nach Anspruch 1, **dadurch gekennzeichnet, dass** zwischen den Schiebern (31 bis 36) Durchgänge (64) für zerteilte Abfallstücke ausgebildet sind.

## Claims

1. Cutting-up apparatus (6) for dividing scrap pieces (7), in particular annular scrap pieces,
having an annular receiving space (63) for the scrap pieces (7) which has a supporting surface (44) for the scrap piece (7) and the radial width of which is markedly larger than the wall thickness of the scrap pieces (7),
having a group of inner slides (31 to 36) which are arranged in a region surrounded by the receiving space (63) and are mounted so as to be adjustable essentially in the radial direction,
having at least one first drive device (26) which, for the specific and power-operated adjustment of the inner slides (31 to 36) in the radial direction, is in operative connection with the slides (31 to 36), so that the slides (31 to 36), with their end faces (43), can be put into and removed from the receiving space (63) from the inside,
having a group of outer slides (51 to 56) which are arranged radially outside the receiving space (63) and are mounted so as to be adjustable essentially in the radial direction, and
having at least one second drive device (11) which, for the specific and power-operated adjustment of the outer slides (51 to 56), is in operative connection with the outer slides (51 to 56), so that the slides (51 to 56), with their end faces, can be put into and removed from the receiving space (63) from the outside.

2. Cutting-up apparatus according to Claim 1, **characterized in that** in each case an outer slide (51 to 56) and an associated inner slide (31 to 36), as interacting slide pair, form a pair of shears.

3. Cutting-up apparatus according to Claim 1, **characterized in that** each inner slide (31 to 36) has an end cutting edge (58).

4. Cutting-up apparatus according to Claim 1, **characterized in that** each outer slide (51 to 56) has an end cutting edge (57).

5. Cutting-up apparatus according to Claim 1, **characterized in that** the inner slides (31 to 36) can be shifted simultaneously into their advanced or their retracted position by their respective drive device (26, 39).

6. Cutting-up apparatus according to Claim 5, **characterized in that** the drive device (26, 39) has an element (26) which is mounted so as to be displaceable at right angles to the radial direction and has an inclined or wedge surface (28) for the respective slide (31 to 36), this inclined or wedge surface (28) moving the slide (31 to 36) radially when the element (26) is displaced longitudinally.

7. Cutting-up apparatus according to Claim 1, **characterized in that** the inner slides (31 to 36) have sections which define the supporting surface (44) for the scrap piece (7).

8. Cutting-up apparatus according to Claim 1, **characterized in that** the outer slides (51 to 56) are actuated in the radial direction with a time lag by their respective drive device (11).

9. Cutting-up apparatus according to Claim 8, **characterized in that** the drive device (11) for the slides to be operated with a time lag is a wobble plate (11) which is in drive connection with the slides (51 to 56) and which is arranged essentially parallel to the supporting surface (44) for the scrap piece (7).

10. Cutting-up apparatus according to Claim 9, **characterized in that** the wobble plate (11) is connected to a drive means (17, 18) which shifts the wobble plate (11), in the rest position, into a position (A) in which all the slides (51 to 56) driven by the wobble plate (11) are located in a position in which they are not advanced, and which guides the wobble plate (11) on an orbital path (B, C, D, E) for advancing the slides (51 to 56) with a time lag.

11. Cutting-up apparatus according to Claim 9, **characterized in that** the wobble plate (11) is connected to the slides (51 to 56) in each case via a link guide (59) which transmits the radial component of the movement of the wobble plate (11) to the slides (51 to 56) and otherwise uncouples the wobble plate (11) from the slides (51 to 56).

12. Cutting-up apparatus according to Claim 1, **characterized in that** the drive means (17, 18) contains two servomotors, of which one is connected to the wobble plate (11) via an eccentric drive (20) and the other is connected to the wobble plate (11) via an eccentric link guide (22, 23).

13. Cutting-up apparatus according to Claim 1, **characterized in that** the wobble plate (11) has a central opening (14) which is arranged above the receiving space (63) and on the boundary of which a cutting edge (16) is provided for trimming deep-drawn or other hollow workpieces (W).

14. Cutting-up apparatus according to Claim 1, **characterized in that** passages (64) for divided scrap pieces are formed between the slides (31 to 36).

## Revendications

1. Dispositif de fragmentation (6) destiné à fragmenter des déchets (7), en particulier des déchets de forme annulaire,
comprenant un espace de réception annulaire (63) pour les déchets (7), qui comporte une surface d'appui (44) pour les déchets (7), et dont la largeur radiale est beaucoup plus grande que l'épaisseur de la paroi des déchets (7),
un groupe de coulisseaux intérieurs (31 à 36) qui sont disposés dans une région entourée par l'espace de réception (63) et montés mobiles sensiblement dans la direction radiale,
au moins un premier dispositif d'entraînement (26) qui est en liaison fonctionnelle avec les coulisseaux (31 à 36) pour déterminer le déplacement, voulu et actionné par force, des coulisseaux intérieurs (31 à 36) dans la direction radiale, de sorte que les faces frontales (43) des coulisseaux (31 à 36) peuvent être positionnées dans l'espace de réception (63) en provenant de l'intérieur et être extraites de cet espace,
un groupe de coulisseaux extérieurs (51 à 56) qui sont disposés radialement à l'extérieur de l'espace de réception (63) et montés mobiles sensiblement dans la direction radiale, et
au moins un deuxième dispositif d'entraînement (11) qui est en liaison fonctionnelle avec les coulisseaux extérieurs (51 à 56) pour déterminer le déplacement, voulu et actionné par force, des coulisseaux extérieurs (51 à 56), de sorte que les faces frontales des coulisseaux (51 à 56) peuvent être positionnées dans l'espace de réception (63) en provenant de l'extérieur et être extraites de cet espace.

2. Dispositif de fragmentation selon la revendication 1, **caractérisé en ce qu'**un coulisseau extérieur (51 à 56) et un coulisseau intérieur correspondant (31 à 36), constituant une paire de coulisseaux coopérant entre eux, forment une cisaille.

3. Dispositif de fragmentation selon la revendication 1, **caractérisé en ce que** chaque coulisseau intérieur (31 à 36) comporte une arête tranchante frontale (58).

4. Dispositif de fragmentation selon la revendication 1, **caractérisé en ce que** chaque coulisseau extérieur (51 à 56) comporte une arête tranchante frontale (57).

5. Dispositif de fragmentation selon la revendication 1, **caractérisé en ce que** les coulisseaux intérieurs (31 à 36) peuvent être placés simultanément dans leur position avancée ou dans leur position rétractée par leur dispositif d'entraînement respectif (26, 39).

6. Dispositif de fragmentation selon la revendication 5, **caractérisé en ce que** le dispositif d'entraînement (26, 39) comporte un élément (26) qui est monté pour coulisser perpendiculairement à la direction radiale, et qui comporte, pour le coulisseau (31 à 36) respectif, une surface oblique ou en coin (28) qui déplace le coulisseau (31 à 36) dans la direction radiale lorsque l'élément (26) est déplacé longitudinalement.

7. Dispositif de fragmentation selon la revendication 1, **caractérisé en ce que** les coulisseaux intérieurs (31 à 36) comportent des segments qui définissent la surface d'appui (44) pour le déchet (7).

8. Dispositif de fragmentation selon la revendication 1, **caractérisé en ce que** les coulisseaux extérieurs (51 à 56) sont actionnés dans la direction radiale de façon décalée dans le temps par leur dispositif d'entraînement (11) respectif.

9. Dispositif de fragmentation selon la revendication 8, **caractérisé en ce que** le dispositif d'entraînement (11) prévu pour les coulisseaux à actionner de façon décalée dans le temps est un plateau oscillant (11) qui est en liaison cinématique avec les coulisseaux (51 à 56) et qui est disposé sensiblement parallèlement à la surface d'appui (44) prévue pour le déchet (7).

10. Dispositif de fragmentation selon la revendication 9, **caractérisé en ce que** le plateau oscillant (11) est relié à un moyen d'entraînement (17, 18) qui, dans une position de repos, place le plateau oscillant (11) dans une position (A) dans laquelle tous les coulisseaux (51 à 56) entraînés par le plateau oscillant (11) se trouvent dans une position qui n'est pas avancée, et qui guide le plateau oscillant (11) sur une piste circonférentielle (B, C, D, E) pour assurer l'avance décalée dans le temps des coulisseaux (51 à 56).

11. Dispositif de fragmentation selon la revendication 9, **caractérisé en ce que** le plateau oscillant (11) est relié à chaque coulisseau (51 à 56) respectif par un guide de coulisse (59) qui transmet la composante radiale du mouvement du plateau oscillant (11) aux coulisseaux (51 à 56) et découple le plateau oscillant (11) des coulisseaux (51 à 56) pour le reste.

12. Dispositif de fragmentation selon la revendication 1, **caractérisé en ce que** le moyen d'entraînement (17, 18) comprend deux servomoteurs dont un est relié au plateau oscillant (11) par l'intermédiaire d'un mécanisme à excentrique (20) et l'autre par l'intermédiaire d'un guide de coulisse d'excentrique (22, 23).

13. Dispositif de fragmentation selon la revendication 1, **caractérisé en ce que** le plateau oscillant (11) comporte une ouverture centrale (14) au-dessus de l'espace de réception (63) et, le long du bord de cette ouverture, une arête tranchante (16) pour le découpage de pièces (W) qui sont embouties ou creuses d'une autre façon.

14. Dispositif de fragmentation selon la revendication 1, **caractérisé en ce qu'**entre les coulisseaux (31 à 36), des passages (64) sont formés pour les déchets fragmentés.
